Europäisches Patentamt

European Patent Office

Office européen des brevets

(19)

(11) Publication number: **0 119 807**
**A2**

(12) ## EUROPEAN PATENT APPLICATION

(21) Application number: **84301650.2**

(22) Date of filing: **12.03.84**

(51) Int. Cl.³: **H 05 B 3/14,** F 02 M 31/12, F 24 H 1/10

(30) Priority: **11.03.83 US 474390**

(43) Date of publication of application: **26.09.84**
**Bulletin 84/39**

(84) Designated Contracting States: **AT BE CH DE FR GB IT LI NL SE**

(71) Applicant: **RAYCHEM CORPORATION, 300 Constitution Drive, Menlo Park California 94025 (US)**

(72) Inventor: **Leary, David Frederick, 232 Glenwood, Woodside California 94062 (US)**

(74) Representative: **Dlugosz, Anthony Charles et al, Raychem Limited Intellectual Property Law Department Faraday Road, Dorcan Swindon Wiltshire (GB)**

(54) **Heating of liquids.**

(57) Apparatus and method for heating electrically insulating liquids, e.g. diesel fuel, by means of a conductive polymer heater which does not have an insulating jacket, so that there is direct physical contact between the liquid and electrically conductive parts of the heater. This results in improved heat transfer to the liquid.

EP 0 119 807 A2

## HEATING OF LIQUIDS

This invention relates to the heating of liquids, especially diesel fuel, by means of conductive polymer heaters.

Conductive polymer heaters, including self-regulating heaters are well known and are described for example in U. S. Patents Nos. 2,952,761, 2,978,665, 3,243,753, 3,351,882, 3,571,777, 3,757,086, 3,793,716, 3,823,217, 3,858,144, 3,861,029, 4,017,715, 4,072,848, 4,085,286, 4,117,312, 4,177,376, 4,177,446, 4,188,276, 4,237,441, 4,242,573, 4,246,468, 4,250,400, 4,255,698, 4,271,350, 4,272,471, 4,304,987, 4,309,596, 4,309,597, 4,314,230, 4,315,237, 4,317, 027, 4,318,881 and 4,330,704; J. Applied Polymer Science 19, 813-815 (1975), Klason and Kubat; Polymer Engineering and Science 18, 649-653 (1978), Narkis et al; German OLS 2,634,999; 2,755,077; 2,746,602; 2,755,076; and 2,821,799; European Application Nos. 38,718, 38,715, 38,713, 38,714, 38,716, 63,440, 83302156.1 and 96,492; and UK App. No. 2,076,106A.

Conductive polymer heaters have proved to be particularly suitable for heating diesel fuel, for example prior to filtration in the fuel systems of diesel engines in vehicles, and in domestic heating systems. For disclosure of various methods of heating diesel fuel and other liquids, reference may be made for example to U.S. Patents Nos. 2,669,299, 3,564,199, 3,935,901, 3,989,019, 4,091,265 and 4,372,279 and to U.K. Applications Nos. 2,100,959A, 2,110,559A, and 2,106,920A.

In the past, all conductive polymer heaters have been provided with an insulating polymeric jacket. We have now discovered that when such a heater is used to heat an electrically insulating liquid, greatly improved results can be obtained by using a heater which does not have an insulating jacket. Absence of the jacket greatly enhances the transfer of heat to the liquid and results in a surprising increase in the power output of the heater.

In one aspect, the invention provides an apparatus for heating a liquid which is an electrical insulator, the apparatus comprising

(1) a container having entry and exit ports for passing a liquid through the container; and

(2) an electrical heater which

    (i) is positioned within the container;

    (ii) comprises

        (a) a heating element composed of a conductive polymer composition, and

        (b) at least two electrodes which can be connected to a source of electrical power to cause current to pass through the heating element; and

    (iii) does not comprise an electrically insulating jacket, whereby liquid passing through the container is in direct physical contact with electrically conductive parts of the heater.

In another aspect, the invention provides a method of heating a liquid which is an electrical insulator, which method comprises contacting the liquid with an electrical heater which comprises

(a) at least two electrodes which are connected to a source of electrical power, and
(b) a conductive polymer heating element through which current passes between the electrodes, the liquid being in direct physical contact with electrically conductive parts of the heater.

In the method and apparatus of the invention, the heater is preferably a strip heater (e.g. a heater which comprises a pair of elongate metal electrodes embedded in an elongate element composed of a PTC conductive polymer). The heater can be placed axially within a conduit through which the liquid is passed. Alternatively the heater can be arranged in spaced-apart coils, e.g. a spiral coil; the liquid can flow through the coils or can follow an elongate curved path which follows the coils of the heater.

The invention is particularly useful for, and will chiefly be described by reference to, the heating of diesel fuel (and in particular #2 diesel fuel) just before it passes through the fuel filter of the fuel supply system of a diesel engine fitted to a wheeled or tracked vehicle. It will be understood, however, that the invention is useful for heating diesel fuels in other contexts and for heating other liquids which are electrical insulators. We have found that removal of the insulating jacket increases the power output of the heater by a factor of at least 1.5, e.g. about 2 (for example from about 50 watts/ft to about 100 watts/ft), when heating diesel fuel.

Self-regulating heaters are preferred for use in this invention, especially such heaters comprising an element composed of a conductive polymer composition which exhibits PTC behavior and which may be cross-linked, for example a continuous elongate element having a pair of elongate electrodes embedded therein. The contact between the liquid and the heater must not of course result in unacceptable damage to the heater; for example, it remains highly desirable that the ends of the heater be sealed, so that the diesel fuel cannot penetrate between the electrodes and the conductive polymer). When using an unjacketed PTC conductive polymer heater to heat diesel fuel, it is preferred to use a cross-linked composition comprising a fluoropolymer, particular a polymer of vinylidene fluoride, especially a low defect fluoropolymer, as disclosed in European Published Application No. 74281 (MP0789).

The heater can be arranged within a container in any way which results in the desired flow pattern. In one embodiment, the container comprises first and second parallel walls, with the heater sandwiched between the walls with the coils thereof lying in a plane. The heater can be arranged in a spiral coil, which is generally preferred, or in a serpentine coil with baffles within each coil to ensure the desired flow pattern. The container can contain one or more entry ports and one or more exit ports. It is preferred that the length of the elongate curved path followed by the liquid is at least 8 times, preferably at least 15 times, the distance between the entry and exit ports.

The power supply used to power the heater can be of any kind appropriate to the heater, but for vehicular systems, the normal vehicle electrical supply, eg. a 12 or 24 volt DC supply, is preferably employed.

For fitting to the fuel supply system of a vehicle, the heater can be fitted within the fuel conduit leading from the fuel tank to the filter, or in the top of the filter, or it can form part of a heating apparatus adapted to fit between the fuel filter and the inlet thereto. This will usually mean that the apparatus will be in the form of a flat container, for example round or square in shape, having the heater and the entry and exit ports in a peripheral portion thereof and having at its center a passageway for fuel which, having been heated in the container and having passed from the exit port(s) to the filter, is now being supplied to the engine. The passageway preferably has screw-threaded top and bottom portions for connection to the fuel system and the fuel filter.

Where a support member is used to maintain the heater in a coiled configuration, the support member must of course allow the fuel to flow around the heater in the desired way. The support is suitably composed of a polymeric dielectric material which is not damaged by the liquid being heated. Preferably the support contains the terminations of the heater electrodes to electrical leads or lugs suitable for connecting the heater to a power supply, and surrounds and seals the terminations. The far end of the heater can likewise be encapsulated in the support. Thus the support can be formed around the coiled heater, eg. by injection molding or by pouring a curable liquid resin, eg. an epoxy resin in a mold.

Alternatively the support comprises a chamber which contains the terminations of the heater electrodes to electrical leads or lugs suitable for connecting the heater to a power supply, and a mass of dielectric material which surrounds and seals the terminations. The far end of the heater can likewise be encapsulated in a mass of dielectric material contained within a chamber in the support.

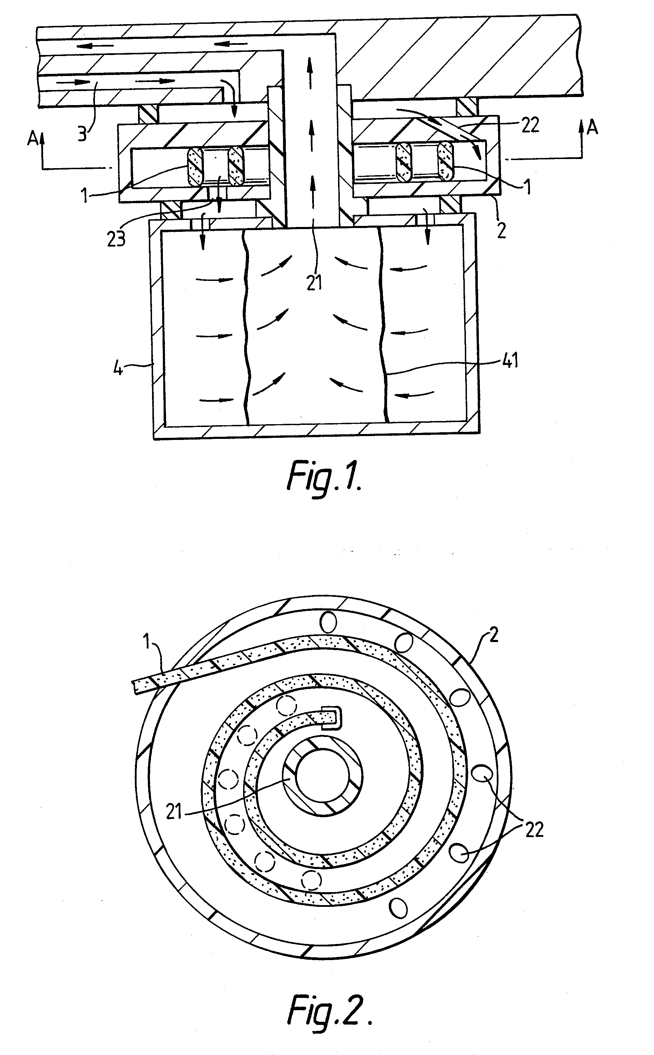

Referring now to the drawing, Figures 1 and 2 show a PTC conductive polymer strip heater 1, which does not have an outer insulating jacket, arranged in the form of a spiral coil within a flat, round box 2 which has a central passageway 21. Fuel entry ports 22 are drilled in the top wall of the container so that diesel fuel which is pumped along line 3 enters the box around the outer periphery of the container and then flows in a spiral around the strip heater 1 until it reaches the fuel exit ports 23, whose position is shown in phantom in Figure 2. The heated fuel then passes into conventional fuel filter 4, through filter element 41 and up through passageway 21 to the engine.

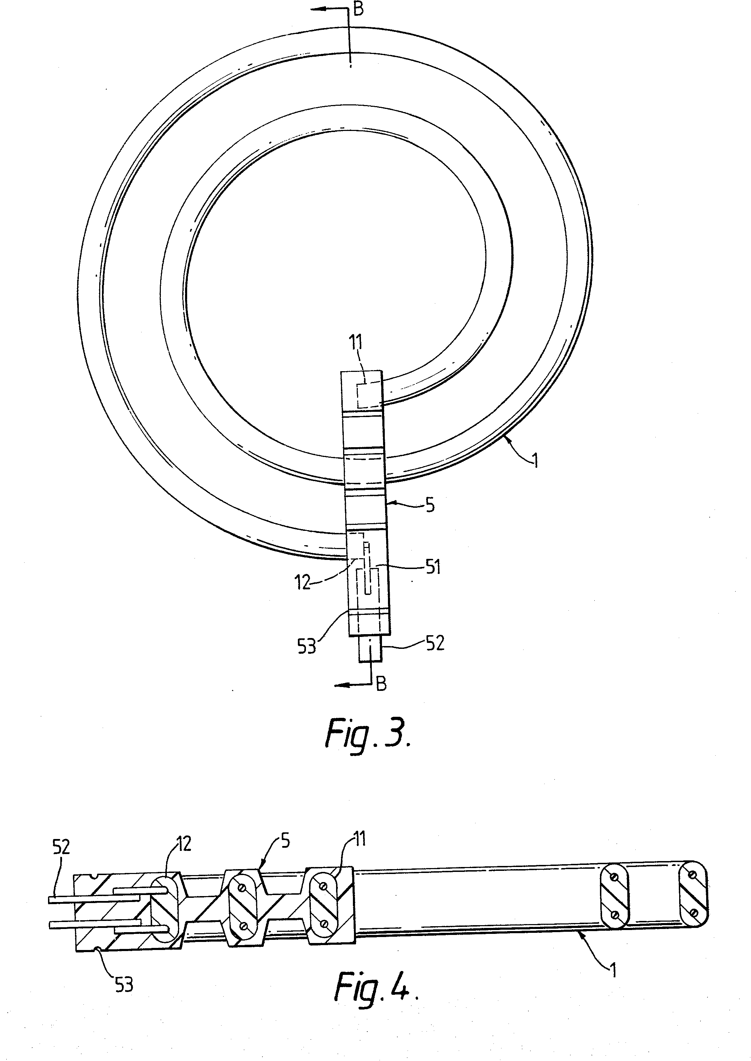

Figures 3 and 4 show an assembly of the invention comprising a PTC conductive polymer strip heater 1, which does not have an outer dielectric jacket, maintained in the form of a flat spiral coil by fixing the ends 11 and 12 of the heater in or on support member 5. Support member 5 has an end section 51 within which the connections between the conductors of the heater and spade lugs 52 are encapsulated, and which also has an O-ring groove 53 in its outer surface.

Especially when an assembly of the invention, eg. as shown in Figures 3 and 4, is used, the container in which it is mounted can be an integral part of the fuel filter mount or a separate container which is secured to the fuel filter mount. The interior surface of the container can be shaped, or provided with deformable portions, so that there is no more than a small gap between the heater and the container walls, in order to ensure that a sufficient proportion of the liquid follows the desired elongate path.

0119807

## CLAIMS

1.  Apparatus for heating a liquid which is an electrical insulator, the apparatus comprising

    (1) a container having entry and exit ports for passing a liquid through the container; and

    (2) an electrical heater which

        (i)   is positioned within the container;
        (ii)  comprises
              (a)  a heating element composed of a conductive polymer composition, and
              (b)  at least two electrodes which can be connected to a source of electrical power to cause current to pass through the heating element; and
        (iii) does not comprise an electrically insulating jacket, whereby liquid passing through the container is in direct physical contact with electrically conductive parts of the heater.

2.  Apparatus according to claim 1 wherein the conductive polymer exhibits PTC behavior.

3.  Apparatus according to claim 1 or 2 wherein the conductive polymer is cross-linked.

4.  Apparatus according to claim 1, 2 or 3 wherein the polymer comprises a fluorinated polymer.

5.    Apparatus according to claim 4 wherein the polymer comprises a polyvinylidene fluoride.

6.    A method according to any one of the preceding claims wherein the heater comprises a pair of elongate metal electrodes embedded in an elongate element composed of the conductive polymer.

7.    A method according to claim 6 wherein the heater is arranged in spaced-apart coils and the liquid flows along an elongate curved path which follows the coils of the heater.

8.    A method according to claim 6 wherein the heater is arranged in a spiral coil.

9.    Apparatus according to any one of the preceding claims which comprises mechanical connection means for removably securing the container between a fuel feed and a fuel filter forming part of the fuel feed system for a diesel engine.

10.   A method of heating a liquid which is an electrical insulator, which method comprises contacting the liquid with an electrical heater which comprises

    (a) at least two electrodes which are connected
        to a source of electrical power, and

    (b) a conductive polymer heating element through
        which current passes between the electrodes,

the liquid being in direct physical contact with electrically conductive parts of the heater.

0119807

MP0856 EPC

11.  A method according to claim 10 wherein the liquid is passed through apparatus as claimed in any one of claims 1 to 8.

12.  A method according to claim 10 or 11 wherein the liquid is diesel fuel.

13.  A method according to claim 12 wherein the diesel fuel is heated just before it passes through a filter.

Fig.1.

Fig.2.

0119807

2/2

Fig. 3.

Fig. 4.